# EUROPÄISCHE PATENTSCHRIFT

(11) **EP 3 027 392 B1**
(45) Veröffentlichungstag und Bekanntmachung des Hinweises auf die Patenterteilung: **13.03.2019**
(21) Anmeldenummer: 14741321.5
(22) Anmeldetag: 21.07.2014
(51) Int. Cl.: B29C 70/44, B29C 70/54, B29C 33/60, B29K 27/12, B29K 27/18, B29L 7/00

(54) **VERFAHREN ZUM FORMEN EINES KÖRPERS IN EINER FORM**
METHOD FOR MOLDING A BODY IN A MOLD
PROCÉDÉ SERVANT À MOULER UN CORPS DANS UN MOULE

(30) Priorität: 01.08.2013 DE 102013215146; 28.10.2013 DE 102013221847
(43) Veröffentlichungstag der Anmeldung: 08.06.2016
(73) Patentinhaber: tesa SE, 22848 Norderstedt (DE)
(72) Erfinder: BERNT, Stephan, 22529 Hamburg (DE); KEREP, Patrick, 22767 Hamburg (DE)
(86) Internationale Anmeldenummer: PCT/EP2014/065585
(87) Internationale Veröffentlichungsnummer: WO 2015/014646

(56) Entgegenhaltungen:
- EP-A2- 2 123 420
- DE-A1-102008 004 388
- DE-A1-102011 112 964
- DE-B3-102006 043 065
- DE-T2- 69 805 535
- US-A1- 2004 115 299
- US-A1- 2004 127 121
- US-A1- 2010 096 772
- US-A1- 2012 312 469
- US-B1- 6 440 566
- US-B1- 7 147 818

## Beschreibung

Die vorliegende Erfindung betrifft ein Verfahren gemäß Anspruch 1 zum Formen eines Körpers in einer Form, bei dem aus mehreren härtbaren Materialschichten ein Körper geformt wird, insbesondere ein Halbflügel eines Rotors, der in einer Windkraftanlage verbaut ist.

Viele Bauteile, teilweise mit komplexen geometrischen Strukturen, werden hergestellt, indem aushärtbares Material wie zum Beispiel Epoxid- oder Polyesterharze in eine Form eingebracht wird, was anschließend ausgehärtet wird.

Beispiele für solche Prozesse sind RTM (Resin Transfer Moulding) und VRTM (Vacuum-Assisted Resin Transfer Moulding). Das Resin Transfer Moulding ist ein Verfahren zur Herstellung von Formteilen aus Duroplasten und Elastomeren. Im Vergleich zum Pressen wird hierbei die Formmasse mittels Kolben von einer meist beheizten Vorkammer über Verteilerkanäle in das Formnest eingespritzt, worin sie unter Wärme und Druck aushärtet. Als Formmasse können Formaldehydharze (Phenolharze oder Aminoplaste) und Reaktionsharze (Polyester wie PET oder Epoxidharze) mit kleinen Füllstoffpartikeln und Elastomere verwendet werden.

Zu Beginn eines Zyklus befindet sich eine vorplastifizierte und dosierte Formmasse in der Vorkammer. Zunächst wird das Werkzeug geschlossen. Danach wird die Formmasse ins Werkzeug eingespritzt und für eine bestimmte Zeit im Werkzeug belassen. Bei dieser sogenannten Verweilzeit kommt es zum Reagieren oder Vulkanisieren der Formmasse. Sie ist dabei von verschiedenen Faktoren abhängig (Harztyp, Füllstoff, Verarbeitungsdruck und -temperatur). Ist die Verweilzeit beendet, kann das Werkzeug geöffnet werden. Die zuvor eingefüllte Formmasse ist nun fest (ausgehärtet) und wird jetzt als Formteil bezeichnet. Dieses kann nun aus dem Werkzeug entformt werden. Danach erfolgt die Reinigung des Werkzeugs und ein neuer Zyklus kann beginnen.

Die Menge der beim Einpressen und Nachpressen benötigen Formmasse sollte dabei immer größer als das Volumen des endgültigen Formteil sein, damit das Werkzeug vollständig befüllt wird. Somit wird garantiert, dass das Formteil vollständig ausgebildet ist und keine Luft eingepresst wird. Die dabei in der Vorkammer überschüssige, zurückgebliebene Formmasse, auch als Restkuchen bezeichnet, muss vor dem Beginn des neuen Zyklus entfernt werden und durch neue Formmasse ersetzt werden.

Um Lufteinschlüsse zu vermeiden, wird meist zusätzlich die Kavität (Formhohlraum) evakuiert.

Um auch lange Fasern oder Faserhalbzeuge (Prewovens/Preform) zu verarbeiten, werden diese zuvor in das Werkzeug eingelegt und mit der Formmasse umspritzt. Auch hier wird vorteilhafterweise meist zusätzlich die Kavität (Formhohlraum) evakuiert.

Die "Prewovens-Verfahren" lassen sich nach Anzahl und Gestaltung der Harzangüsse einteilen. Im Folgenden wird der Eintrag des Harzes in das Faser-Halbzeug als Injektion bezeichnet, unabhängig davon auf welche Weise der Druckgradient erzeugt wird.
- Punktinjektion: Das Harz wird nur an einer Stelle in das Halbzeug injiziert. Beim Punktanguss kann die Fließfront Luft einschließen, was zu Fehlstellen führt.
- Mehrpunktinjektion: Durch mehrere Injektionsstellen kann die Form schneller mit Harz gefüllt werden. Der Einschluss von Luft kann durch geschickte Positionierung verhindert werden.
- Linien-Injektion: Bei der Linieninjektion wird nicht an einer punktförmigen Stelle injiziert sondern linienhaft am Rand der Form. Dies kann bei Bauteilen mit großer Streckung von Vorteil sein, da nur die kürzere Kantenlänge durchströmt werden muss.
- Fließkanal-Injektion: Das Harz wird durch einen breiten Kanal injiziert, der über oder unter dem Faser-Halbzeug liegt.
- Kaskaden-Injektion: Um den Druckgradienten gering zu halten, werden mehrere Injektionsstellen in Richtung der Fließfront angebracht. Es ist dazu jedoch notwendig, die Injektionsleitungen der Fließfront folgend zu öffnen und zu schließen.

Als Formarten sind feste Formen, weiche Formen und Mischformen bekannt.

Als Injektionsharze werden Harze verwendet, die eine niedrige Viskosität besitzen. Dadurch bleibt der Strömungswiderstand beim Durchströmen der Form gering und es sind kleinere Druckdifferenzen zum Füllen notwendig. Reaktionsharze für RTM-Verfahren werden als spezielle Injektionsharze angeboten, die aus einer Harz- und Härterkomponente bestehen. Niedrigreaktive Harzsysteme können bereits vor der Infusion gemischt werden. Sollen hochreaktive Harzsysteme verwendet werden, so können Harz und Härter erst unmittelbar in der Infusionsleitung beziehungsweise der Form gemischt werden. Auf diese Weise sind geringere Taktzeiten möglich. Verfahren, bei denen die Injektionsharz-Komponenten erst unmittelbar vor der Injektion gemischt werden, sind als RIM-Verfahren (Reaction Injection Moulding) bekannt.

Weitere Details lassen sich dem Chemielexikon Römpp entnehmen, und zwar unter dem Stichwort "Spritzgießen" (2013 Georg Thieme Verlag, Dokumentkennung RD-19-03499, letzte Aktualisierung: Juli 2011).

Zum Aufbau eines Körpers, beispielsweise dem (Halb-)Flügel eines Rotors, der in einer Windkraftanlage verbaut ist, werden Glasfasermatten verwendet, die als Teilschichten in eine geeignet gestaltete Form eingebracht werden. Anschließend werden die Schichten mit einem Harz verklebt und in der Form gehärtet, um ein faserverstärktes Polymer oder einen glasfaserverstärkten Kunststoff zu ergeben.

Um ein einfaches und zerstörungsfreies Entformen zu gewährleisten, muss die Form, die den Negativ- und gegebenenfalls auch den Positivabdruck des zu bauenden Teils darstellt, mit einem anti-adhäsiven Material präpariert werden, das vor dem Aufbau der Schichten auf die Form aufgetragen wird.

Dazu werden häufig Trennmittel eingesetzt wie Polyvinylalkohol oder Silikonwachse. Bekannt sind auch Trennmittel auf Silan- oder Siloxanbasis, beispielsweise die Produkte aus der Frekote-Serie der Firma Henkel. Des Weiteren wird PTFE-beschichtetes Glasgewebe eingesetzt, das in Form eines Klebebandes auf die Form aufgebracht wird und das Trennmittel ersetzt.

Das Trennmittel ist in einer gleichmäßigen Schicht aufgebracht werden, und diese Schicht muss absolut glatt sein, damit die äußere Oberfläche des Körpers ebenfalls glatt ist.

Die üblich eingesetzten flüssigen Trennmittel sind Lösungsmittel basiert und bedürfen einer Trocken- und Aushärtezeit von jeweils 20 bis 30 min. Die Applikation des Trennmittels dauert ebenfalls 20 bis 30 min.
Da je nach Anwender vor jedem Bauzyklus erneut mit Trennmittel ausgerüstet wird, entsteht dadurch insgesamt eine Totzeit von 1,5 h vor jedem Bauzyklus.

Als weiterer Nachteil ist zu nennen, dass die Trennmittel sich teilweise auf das Bauteil übertragen, was eine direkte anschließende Weiterverarbeitung zum Beispiel durch Lackieren erschwert. Das Trennmittel muss erst entfernt werden, was ebenfalls Zeit in Anspruch nimmt.

Weiterhin ist bekannt, dass die Trennwirkung solcher Trennmittel nicht 100 %ig ist. Aufgrund der Tatsache, dass das Harz direkten Kontakt zur Form hat, lagert sich dadurch nach jedem weiteren Entformungszyklus an einigen Stellen eine geringe Menge Harz ab. Dieser Effekt summiert sich so stark, dass die Form je nach Schweregrad nach 200 Zyklen abgeschliffen und poliert werden muss, da sonst die Passgenauigkeit der entformten Bauteile nicht mehr gegeben ist.

Einige der verwendeten Trennmittel basieren auf organischen Lösungsmitteln, welche beim Trocknen verdunsten und die Umgebungsluft belasten. In bestimmten Fällen müssen dafür extra Sicherheitsvorkehrungen getroffen werden, um die Brand- oder Explosionsgefahr zu minimieren.

Eine wenig verbreitete Alternative besteht darin, die Bauteilform mit PTFE beschichteten Gewebeklebebändern auszukleiden. Diese müssen je nach Qualität weniger oft ausgetauscht werden und bieten eine gute Trennwirkung. Das spart vor allem Zeit, die für weitere Produktionszyklen genutzt werden kann.

Nachteilig ist der Applikationsprozess des Gewebeklebebands in der dreidimensionalen Form, weil darauf geachtet werden muss, dass so wenig wie möglich Unregelmäßigkeiten wie Luftblasen unter dem Klebeband, überlappende Klebebandkanten oder Falten erzeugt werden.
Dies wird enorm erschwert durch die Steifigkeit und die fehlende Flexibilität des PTFE behandelten Glasgewebeträgers.

Bei der Herstellung eines PTFE beschichteten Gewebes wird üblicherweise ein sehr breiter Ballen auf der Ober- und der Unterseite mit PTFE benetzt und später in viele Rollen mit der gewünschten Breite aufgeschnitten. Dadurch ist an den Schnittkanten der Rollen kein PTFE. Dies wiederum hat zur Folge, dass sich das Gewebe und damit das Klebeband in der Form mit Flüssigharz vollsaugen und somit die Trennwirkung beziehungsweise die Zahl der Zyklen bis zum kompletten Austausch des Tapes reduziert wird.

Es gibt große qualitative Unterschiede zwischen den PTFE-behandelten Glasgewebeträgern. Kaum zu verhindern sind sogenannte Mikrorisse in der PTFE-Schicht, in die Harz eindringen kann. Je nach Qualität treten diese Risse mehr oder weniger häufig auf. Diese fahren dazu, dass sich das Klebeband in der Mitte mit Harz vollsaugt, was wie im vorigen Absatz beschrieben, zu einer Reduktion der Lebenszeit führt.

Weiterhin lässt sich nicht verhindern, dass das Glasfasergewebe (so wie jedes Gewebe) an den Schnittkanten ausfranzt und einzelne Fasern in die Form stehen. Wenn das Bauteil entformt wird, führt das dazu, dass die Faser und teilweise das Klebeband mit herausgerissen werden. Eine einmal herbeigeführte Verletzung dieser Art vergrößert sich entsprechend schnell, so dass die entstehende Lücke geflickt werden muss. Die neu entstandenen Kanten sind ebenfalls empfindlich, so dass dies ein sich selbstverschlechternden Prozess darstellt.

Somit verliert auch ein mit PTFE beschichtetes Gewebeklebeband nach und nach seine Trennwirkung, so dass dieses nach zum Beispiel 30 Entformungen ausgetauscht werden muss.

Aus der US 2012/312469 A1 ist eine Form zur Herstellung eines Windradflügels bekannt, bei dem eine Form mit einer Lage eines nichtklebenden Liners ausgekleidet wird. Der Liner kann aus einer Folie bestehen, die Fluorpolymere enthält. Dadurch wird vermieden, dass der Liner am Verbundwerkstoff des Windradflügels anhaftet. Falls Fehlstellen oder Löcher in der Linerschicht auftreten, ist vorgesehen, Abschnitte des Liners selbstklebend auszurüsten, die dann auf die Fehlstellen aufgebracht werden können.

Die US 2004/115299 A1 offenbart einen wiederverwendbaren Vakuumbeutel, der zum Aufbringen mindestens einer Dichtmittelraupe konfiguriert ist, wobei der Dichtmittelwulst während der Herstellung eines Verbundteils auf dem Formwerkzeug eine vakuumdichte Abdichtung des wiederverwendbaren Vakuumbeutels mit einem Formwerkzeug bereitstellt, wobei der wiederverwendbare Vakuumbeutel mindestens eine elastomere Schicht mit Polymeren umfasst. Die elastomere Schicht ist mit dem Formwerkzeug abdichtbar ist und weist einen umlaufenden Dichtungsflansch auf.

Des Weiteren ist ein Fluorelastomerstreifen mit Polymeren vorgesehen, der sich im Wesentlichen entlang des Dichtungsflansches erstreckt. Die Polymere der Elastomerschicht vernetzen bei einer erhöhten Temperatur mit den Polymeren des Fluorelastomerstreifens vernetzen, so dass eine dauerhafte Verbindung zwischen dem Dichtungsflansch gebildet wird.

Die US 2004/0127121 A1 beschreibt ein Klebeband mit einem Träger, der eine Releaseschicht und eine Trägerschicht aufweist. Des Weiteren sind ein Gitterstoff sowie eine druckempfindliche Klebeschicht vorhanden, die über dem Gitterstoff und der Substratschicht des Trägers aufgetragen ist. Als Polymer in der Releaseschicht kann Polytetrafluorethylen verwendet werden.

Aufgabe der vorliegenden Erfindung ist, ein Verfahren zum Formen eines Körpers aus aushärtbaren Materialschichten in einer Form anzugeben, das bezüglich seiner Zyklusschritte optimiert ist durch ein verbessertes Klebeband, das zwischen den Materialschichten und der Form eingesetzt wird.

Gelöst wird diese Aufgabe durch ein Verfahren, wie es im Hauptanspruch niedergelegt, ist. Gegenstand der Unteransprüche sind vorteilhafte Weiterentwicklungen des Erfindungsgegenstandes.

Demgemäß betrifft die Erfindung ein Verfahren zum Formen eines Körpers in einer Form gemäß Anspruch 1.

Gemäß einer bevorzugten Variante des Verfahrens wird vor dem Aufbringen des Klebebands die Innenseite der Form mit einem Trennmittel ausgerüstet.

Weiter vorzugsweise erfolgt das Aushärten der Materialschichten unter Vakuum.

Die einzelnen Verfahrensschritte sind beispielsweise in der EP 2 388 131 A1 umfassender erläutert.

Als Fluorpolymere oder fluorhaltige Polymere werden im Rahmen dieser Offenbarung sowie allgemein sowohl fluorhaltige Polymere mit ausschließlich Kohlenstoffatomen als auch solche mit Heteroatomen in der Hauptkette bezeichnet. Vertreter der ersten Gruppe sind Homo- und Copolymere olefinisch-ungesättigter fluorierter Monomeren.

Die Einteilung der aus diesen Monomeren resultierenden Fluorpolymere erfolgt in die Kategorien Polytetrafluorethylen, Fluorthermoplaste, Fluorkautschuke und die daraus durch Vulkanisation gewonnenen Fluorelastomere. Wichtigste Vertreter der Fluorpolymere mit Heteroatomen in der Hauptkette sind die Polyfluorsiloxane und Polyfluoralkoxyphosphazene.

Vorzugsweise enthält die Trägerfolie zu 50 Gew.-%, weiter vorzugsweise zu 75 Gew.-%, besonders vorzugsweise zu 90 Gew.-%, ganz besonders vorzugsweise zu 95 Gew.-% ein oder mindestens zwei Fluorpolymere (jeweils bezogen auf die Gesamtzusammensetzung der Trägerfolie).

Weiter vorzugsweise bestehen die die Trägerfolie bildenden Polymere zu 100 Gew.-% aus einem oder mindestens zweien Fluorpolymeren. Den Fluorpolymeren können zusätzlich optional die später geschilderten Additive zugesetzt sein. Letztere sind - wie gesagt - nicht zwingend, sondern können auch nicht verwendet werden.

Als Fluorpolymere sind insbesondere PTFE (Polytetrafluorethylen), ETFE (Poly(ethylen-co-tetrafluoroethylen)), FEP (Poly(tetrafluorethylen-co-hexafluorpropylen)), PVDF (Poly(1,1-difluorethen)) oder PFA (Perfluoralkoxy-Polymere) geeignet oder Gemische aus zwei oder mehreren der genannten Fluorpolymere.

PTFE bezeichnet Fluorpolymere, die aus Tetrafluorethen-Monomeren zusammengesetzt sind.

ETFE ist ein fluoriertes Copolymer bestehend aus den Monomeren Chlortrifluorethylen oder auch Tetrafluorethylen und Ethylen.

FEP, auch fluoriertes Ethylen-Propylen-Copolymer genannt, bezeichnet Copolymere aus Tetrafluorethen und Hexafluorpropen.

PVF ist ein aus Vinylfluorid hergestelltes Polymer (Polyvinylfluorid).

PCTFE ist ein aus Chlortrifluorethylen aufgebautes Polymer (Polychlortrifluorethylen).

ECTFE ist ein Copolymer bestehend aus Ethylen und Chlortrifluorethylen PVDF bezeichnet aus 1,1-Difluorethen (Vinylidenfluorid) herstellbare Fluorpolymere. PFA bezeichnet Copolymere mit Gruppierungen wie 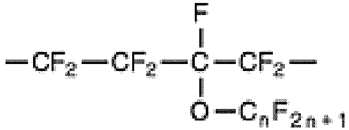 als Grundeinheiten [Poly(tetrafluorethylen-co-perfluoralkylvinylether)]. PFA resultieren aus der Copolymerisation von Tetrafluorethen und Perfluoralkoxyvinylethern (zum Beispiel Perfluorvinylpropylether, *n* = 3).

Die Fluorpolymere können mit weiteren Polymeren vermischt sein, wobei eine gute Mischbarkeit der Fluorpolymere mit den anderen Polymeren gegeben sein muss. Geeignete Polymere sind olefinische Polymere wie Homo- oder Copolymere von Olefinen wie Ethylen, Propylen oder Butylen (der Begriff Copolymer ist hier sinngemäß dahingehend zu verstehen, dass er Terpolymere mit einschließt), Polypropylenhomopolymere oder Polypropylencopolymere einschließlich der Block-(Impact-) und Randompolymere.
Weitere Polymere können allein oder in Mischung aus der Gruppe der Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide ausgewählt werden.

Die Polymere zur Bildung der Trägerfolie können in Reinform oder in Blends mit Additiven wie Antioxidantien, Lichtschutzmitteln, Antiblockmitteln, Gleit- und Verarbeitungshilfsmitteln, Füllstoffen, Farbstoffen, Pigmenten Treib- oder Nucleierungsmitteln vorliegen.
Vorzugsweise weist die Folie - mit Ausnahme von Farbstoffen - keines der genannten Additive auf. Farbstoffe werden bevorzugt eingesetzt, sind aber auch nicht zwingend vorhanden.

Die Trägerfolie besteht aus einem zumindest zweischichtigen Laminat aus zwei oder mehr Folienlagen. Bevorzugt besteht die mehrschichtige Trägerfolie aus bis zu zehn Folienlagen, insbesondere aus zwei bis fünf Folienlagen.
Die äußerste Folienlage, also die, die den den Körper bildende Materialschichten zugewandt ist, ist die ein oder mindestens zwei Fluorpolymere enthaltende Trägerfolie. Zwischen dieser Trägerfolie und der Klebemasse können weitere Folienlagen aus beliebigem Material vorhanden sein, (zum Beispiel aus Polyethylen, Polypropylen, Polyester, PA, PVC und andere Folien). Die weiteren Folienlagen können auch aus dem gleichen oder identischen Material bestehen wie die äußerste Folienlage.

Gemäß einer bevorzugten Ausführungsform der Erfindung besteht die Trägerfolie aus mindestens zwei Folienlagen, wobei die beiden äußeren Folienlagen unterschiedlich eingefärbt sind, vorzugsweise aus genau zwei.
Auf diese Weise entsteht ein einfacher, aber klar erkennbarer Verschleißnachweis. Wenn die äußerste Folienlage an einigen Stellen aufgrund des Verschleißes durchgescheuert ist, schimmert an diesen Stellen die darunter befindliche, wie erwähnt andersfarbige Folienlage durch (selbstverständlich sollten die Färbungen so gewählt werden, dass ein entsprechender Kontrast entsteht). Wenn also die untere Folienlage zu sehen ist, ist dies ein Anzeichen, dass es Zeit wird, das Klebeband auszutauschen.

Gemäß einer bevorzugten Ausführungsform liegt die Dicke der Trägerfolie zwischen 15 und 350 µm, vorzugsweise zwischen 30 und 200 µm, weiter vorzugsweise zwischen 50 und 150 µm.

Vorzugsweise ist die auf der Trägerfolie aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar.

Bevorzugt werden Klebemassen, die auf Acrylat oder Silikon basieren.

Die Klebemasse kann aus der Gruppe der Naturkautschuke oder der Synthesekautschuke oder aus einem beliebigen Blend aus Naturkautschuken und/oder Synthesekautschuken gewählt werden, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.
Daneben hat sich ein 100%-System auf Styrol-Isopren-Styrol (SIS) als geeignet erwiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt. Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal®, insbesondere Acronal® DS 3458 oder AC Resin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder ß-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.
Auf die Darstellung des Wissensstandes im "Handbook of Pressure Sensitive Adhesive Technology" von Donatas Satas (van Nostrand, 1989) sei ausdrücklich hingewiesen.

Geeignete Füllstoffe und Pigmente sind beispielsweise Ruß, Titandioxid, Calciumcarbonat, Zinkcarbonat, Zinkoxid, Silicate oder Kieselsäure.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Die Verankerung ist üblicherweise so stark, dass ein solches Klebeband problemlos von einer Rolle abgewickelt werden kann, ohne dass die Verankerung der Klebemasse reißt und es zum so genannten Umspulen der Klebemasse kommt (die Klebemasse befindet sich dann auf der Rückseite des Trägers). Des Weiteren wird von den meisten Haftklebebändern erwartet, dass diese vom Untergrund wieder abgelöst werden können, also möglichst spurlos wieder aufgenommen werden können. Das heißt, das Klebeband darf nicht zwischen Träger und Klebemasse adhäsiv brechen.

Gemäß einer bevorzugten Ausführungsform liegt der Masseauftrag der Klebemasse auf die Trägerfolie zwischen 10 und 200 g/m²; vorzugsweise zwischen 20 und 100 g/m², besonders vorzugsweise zwischen 30 und 75 g/m².

Als Materialschichten zur Bildung des Formteils wird insbesondere Fasermaterial (wie zum Beispiel GFK (glasfaserverstärkter Kunststoff), CFK (kohlenstofffaserverstärkter Kunststoff) oder Prepreg und so weiter) verwendet.

Prepeg bezeichnet ein Halbzeug, bestehend aus Endlosfasern und einer ungehärteten duroplastischen Kunststoffmatrix, das vor allem. im Leichtbau Verwendung findet. Die Endlosfasern können als reine unidirektionale Schicht, als Gewebe oder Gelege vorliegen.

Zur Erhöhung der Adhäsion zwischen der Klebemasse und dem Trägermaterial oder zwischen Trennlack und Trägermaterial kann das Trägermaterial zur Erhöhung der Oberflächenenergie einer Coronabehandlung unterzogen werden.

Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung.

Des Weiteren ist ein Ätzen der Folie vorteilhaft, um die Klebemasse verankern zu können.

Beschreibungen der üblicherweise für Klebebänder verwendeten Klebmassen sowie Primern finden sich zum Beispiel im "Handbook of Pressure Sensitive Adhesive Technology" von Donatas Satas (van Nostrand, 1989).

Der allgemeine Ausdruck "Klebeband" umfasst im Sinne dieser Offenbarung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Als Trennmaterial eignet sich bevorzugt ein nicht-fusselndes Material wie eine Kunststofffolie oder ein gut verleimtes, langfaseriges Papier.

Die Klebebänder weisen insbesondere Lauflängen von 1000 bis 30.000 m auf. Als Breite der Rollen werden üblicherweise 10, 15, 19, 25 und 30 mm gewählt.

Ein folienartiger Träger, der vollständig oder zu mindestens 50 Gew.-% aus fluoriertem Polymer besteht zeigt nicht die oben beschriebenen Nachteile des Ausfransens durch Glasfasern oder Gewebe. Auch die Steifigkeit eines solchen Klebebands ist viel niedriger, und es passt sich deshalb gut an die Form an. Das Trägermaterial zeigt eine gewisse Dehnbarkeit, die zusätzlich bei der Anpassung an die Form hilft.

Weiterhin ist die innere Festigkeit eines solchen Trägermaterials deutlich höher, so dass auch bei größeren auftretenden Kräften kein Abspalten von Tragerteilen zu beobachten ist.

Im Folgenden wird die Erfindung anhand eines Beispiels näher erläutert, ohne auch hiermit dieselbe in irgendeiner Art und Weise einschränken zu wollen.

### Beispiel

- 50 g/m² Silikonklebemasse (Dow Corning® Q2-7406)
- 100 µm PTFE-Träger (NORTON® 124 Sintered Extruded PTFE Film)
- Aktivierung des Trägers (durch übliches Ätzverfahren)

### Gegenbeispiel

- 50 g/m² Silikonklebemasse (Dow Corning® Q2-7406)
- 150 µm PTFE-beschichtetes Glasgewebe (Träger)
- Aktivierung des Trägers (durch übliches Ätzverfahren)

Das Klebeband gemäß Beispiel 1 lässt sich auch nach mehreren Entformungsschritten nahezu rückstandsfrei vom Untergrund ablösen und zeigte über die gesamte Zeit eine gute Trennwirkung.

Im Fall des Gegenbeispiels beobachtet man beim Ablösen des Klebebands bereits nach dem ersten Zyklus Rückstände von Klebmasse auf der Form. Nach drei bis fünf Zyklen ist ein Spalten des Trägers in z-Richtung zu beobachten, das heißt, der Träger spaltet in sich, und es bleibt teilweise eine Schicht PTFE auf der Oberfläche zurück, die sich nur schwer entfernen lässt.

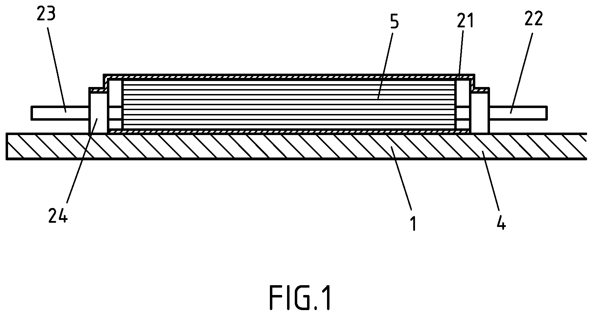

Die Klebebänder werden dazu in eine mit einem üblichen Trennmittel, zum Beispiel Frekote NC 44 (ein Trennmittel enthaltend eine Mischung aus Dibutylether und Polydimethylsiloxan (PDMS), was ein Gemisch aus vollständig methylierten linearen Siloxan-Polymeren mit endständigen Trimethylsiloxat-Einheiten ist) oder ME 143 der Firma Miller Stephenson (ein lösungsmittelbasierte Suspension von niedermolekularem PTFE) ausgerüstete Form eingeklebt. Entsprechend der Figur 1 werden mehrere Bauzyklen durchgeführt. Die Temperatur während des Aushärtens beträgt 80 bis 90 °C. Das Vakuum beträgt 0,1 bar.

Es werden bis zu zehn Bauzyklen simuliert.

Im Folgenden soll das erfindungsgemäße, in dem Anspruch 1 definierte, Verfahren anhand mehrerer Figuren beispielhaft näher erläutert werden, ohne die Erfindung auf diese Ausführungsformen zu beschränken.

Es zeigen:
- Figur 1: die Anordnung der einzelnen Schichten in der Form im seitlichen Schnitt,
- Figur 2: die Anordnung der einzelnen Schichten in der Form von oben und
- Figur 3: einen vereinfachten Detailausschnitt der Figur 1.

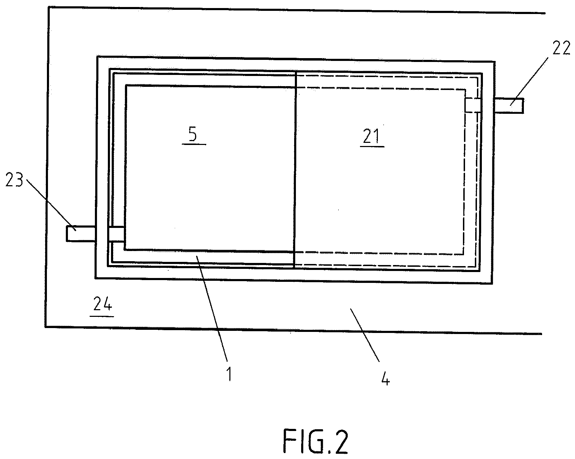

In der Figur 1 ist die Anordnung der einzelnen Schichten in der Form im seitlichen Schnitt dargestellt, in der Figur 2 von oben.

Die Form 4 wird mit einer sehr dünnen, wenige µm dicke Schicht eines Trennmittels 6, zum Beispiel einer lösungsmittelbasierten Suspension von niedermolekularem PTFE, ausgerüstet, deren Dicke in der Figur 1 nicht im richtigen Verhältnis gezeigt ist. Der Auftrag erfolgt mit einem Lappen. Danach trocknet die Suspension, woraus ein sehr dünner Film resultiert. Anschließend wird das Klebeband 1 in einer Lage auf der Innenseite der Form 4 aufgebracht.

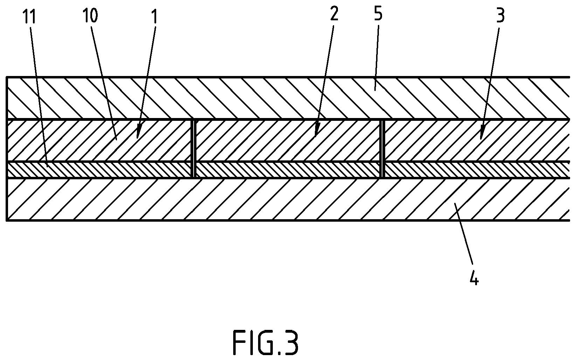

In der Figur 3 ist gezeigt, dass die Kanten der einzelnen Streifen des Klebebands 1, 2 ,3 stoß an stoß liegen, also keine Zwischenräume aufweisen. Die einzelnen Klebebandstreifen 1, 2, 3 bestehen aus einer Trägerfolie 10, auf die eine Klebemassenschicht 11, insbesondere Selbstklebemasse, aufgebracht ist.

Nach dem Verkleben des Klebebands 1 werden die den Körper bildende Materialschichten 5 auf dem Klebeband verteilt.

Anschließend wird eine Dichtfolie 21 so über dem Material 5 mit Hilfe eines zweiten Klebebands 24 fixiert, dass sich ein abgeschlossener Raum ergibt.

In der Figur 2 ist die Schutzfolie 21 nur zur Hälfte gezeigt. Die Schutzfolie 21 wird von dem zweiten Klebeband 24 auf der Form 4 fixiert.

Durch einen Abgang 22 wird die Luft entfernt. Über einen Zugang 23 wird das Harz den Materialschichten 5 zugeführt, bis diese getränkt sind.
Es erfolgt der Aushärtungsprozeß.

Wenn dieser abgeschlossen ist, wird die Dichtfolie 21 entfernt und der fertige Formkörper kann der Form 4 entnommen werden.

## Patentansprüche

1. Verfahren zum Formen eines Körpers in einer Form (4), umfassend die folgenden Schritte:
• Aufbringen eines Klebebands (1) auf der Innenseite einer Form (4), wobei die Kanten der einzelnen Streifen des Klebebands (1, 2 ,3) Stoß an Stoß liegen, also keine Zwischenräume aufweisen
• Verteilen der den Körper bildende Materialschichten (5) auf dem Klebeband (1)
• Aushärtung der Materialschichten (5)
• Entfernen des Körpers aus der Form (4) wobei die einzelnen Klebebandstreifen (1, 2, 3) aus einer Trägerfolie (10) bestehen, auf die einseitig eine Klebemassenschicht (11), insbesondere Selbstklebemasse ausgebracht ist, und die Trägerfolie (10) ein oder mindestens zwei Fluorpolymere enthält, wobei die Trägerfolie (10) aus einem zumindest zweischichtigen Laminat aus zwei oder mehr Folienlagen besteht, wobei die äußerste Folienlage, also die Folienlage, die den den Körper bildenden Materialschichten zugewandt ist, die die ein oder mindestens zwei Fluorpolymere enthaltende Folienlage ist.

2. Verfahren nach Anspruch 1,
**dadurch gekennzeichnet, dass**
die Trägerfolie (10) zu 50 Gew.-%, weiter vorzugsweise zu 75 Gew.-%, besonders vorzugsweise zu 90 Gew.-%, ganz besonders vorzugsweise zu 95 Gew.-% ein oder mindestens zwei Fluorpolymere, jeweils bezogen auf die Gesamtzusammensetzung der Trägerfolie, enthält oder die die Trägerfolie (10) bildenden Polymere zu 100 Gew.-% aus einem oder mindestens zweien Fluorpolymeren bestehen.

3. Verfahren nach den Ansprüchen 1 oder 2,
**dadurch gekennzeichnet, dass**
als Fluorpolymere PTFE (Polytetrafluorethylen), ETFE (Poly(ethylen-co-tetrafluoroethylen)), FEP (Poly(tetrafluorethylen-co-hexafluorpropylen)), PVF (Polyvinylfluorid), PCTFE (Polychlortrifluorethylen), ECTFE (Poly(ethylen-co-chlortrifluorethylen), PVDF (Poly(1,1-difluorethen)) oder PFA (Perfluoralkoxy-Polymere) oder Gemische aus zwei oder mehreren der genannten Fluorpolymere eingesetzt werden.

4. Verfahren nach zumindest einem der Ansprüche 1 bis 3,
**dadurch gekennzeichnet, dass**
die Fluorpolymere mit weiteren Polymeren vermischt sind wie olefinische Polymere wie Homo- oder Copolymere von Olefinen wie Ethylen, Propylen oder Butylen, Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide.

5. Verfahren nach zumindest einem der vorherigen Ansprüche,
**dadurch gekennzeichnet, dass**
die Dicke der Trägerfolie (10) zwischen 15 und 350 µm, vorzugsweise zwischen 30 und 200 µm, weiter vorzugsweise zwischen 50 und 150 µm liegt.

6. Verfahren nach zumindest einem der vorherigen Ansprüche,
**dadurch gekennzeichnet, dass**
die auf der Trägerfolie (10) aufgebrachte Klebemasse (11) eine Haftklebemasse, insbesondere auf Acrylat- oder Silikonbasis ist.

7. Verfahren nach zumindest einem der vorherigen Ansprüche,
**dadurch gekennzeichnet, dass**
die Trägerfolie (10) aus bis zu zehn Folienlagen, besonders vorzugsweise aus zwei bis fünf Folienlagen besteht.

8. Verfahren nach zumindest einem der vorherigen Ansprüche,
**dadurch gekennzeichnet, dass**
die Trägerfolie (10) aus mindestens zwei Folienlagen besteht, wobei die beiden äußeren Folienlagen unterschiedlich eingefärbt sind, vorzugsweise aus genau zwei.

9. Verfahren nach zumindest einem der vorherigen Ansprüche,
**dadurch gekennzeichnet, dass**
der Masseauftrag der Klebemasse (11) auf die Trägerfolie (10) zwischen 10 und 200 g/m²; vorzugsweise zwischen 20 und 100 g/m², besonders vorzugsweise zwischen 30 und 75 g/m² beträgt.

10. Verfahren nach zumindest einem der vorherigen Ansprüche,
**dadurch gekennzeichnet, dass**
vor dem Aufbringen des Klebebands (1) die Innenseite der Form (4) mit einem Trennmittel ausgerüstet wird.

11. Verfahren nach zumindest einem der vorherigen Ansprüche,
**dadurch gekennzeichnet, dass**
das Aushärten der Materialschichten (5) unter Vakuum stattfindet.

## Claims

1. Process for the molding of a body in a mold (4), comprising the following steps:
• application of an adhesive tape (1) on the internal side of a mold (4),
where the edges of the individual strips of the adhesive tape (1, 2, 3) are abutted, i.e. leave no intervening spaces
• distribution, on the adhesive tape (1), of the layers of material (5) that form the body
• hardening of the layers of material (5)
• removal of the body from the mold (4),
where the individual strips of adhesive tape (1, 2, 3) are composed of a backing foil (10) onto one side of which an adhesive layer (11), in particular self-adhesive, has been applied, and the backing foil (10) comprises one or at least two fluoropolymers, where the backing layer (10) is composed of an at least two-layer laminate made of two or more foil layers, where the outermost foil layer, i.e. the foil layer which is facing toward the layers of material forming the body, is the foil layer comprising one or at least two fluoropolymers.

2. Process according to Claim 1,
**characterized in that**
the backing foil (10) comprises 50% by weight, more preferably 75% by weight, particularly preferably 90% by weight, very particularly preferably 95% by weight, of one or at least two fluoropolymers, based in each case on the entire composition of the backing foil, or the polymers forming the backing foil (10) are composed of 100% by weight of one or at least two fluoropolymers.

3. Process according to Claim 1 or 2,
**characterized in that**
fluoropolymers used are PTFE (polytetrafluoroethylene), ETFE (poly(ethylene-co-tetrafluoroethylene)), FEP (poly(tetrafluoroethyle ne-co-hexafluoropropylene)), PVF (polyvinyl fluoride), PCTFE (polychlorotrifluoroethylene), ECTFE (poly(ethylene-co-chlorotrifluoroethylene), PVDF (poly(1,1-difluoroethene)), or PFA (perfluoroalkoxy polymers), or a mixture of two or more of the fluoropolymers mentioned.

4. Process according to at least one of Claims 1 to 3, **characterized in that**
the fluoropolymers have been mixed with other polymers, for example olefinic polymers, for example homo- or copolymers of olefins, for example ethylene, propylene, or butylene, polyesters, for example in particular polyethylene terephthalate (PET), polyamides, polyurethanes, polyoxymethylene, polyvinyl chloride (PVC), polyethylene naphthalate (PEN), ethylene-vinyl alcohol (EVOH), polyvinylidene chloride (PVDC), polyvinylidene fluoride (PVDF), polyacrylonitrile (PAN), polycarbonate (PC), polyamide (PA), polyether sulfone (PES), polyimide (PI), polyarylene sulfides, and/or polyarylene oxides.

5. Process according to at least one of the preceding claims,
**characterized in that**
the thickness of the backing foil (10) is from 15 to 350 µm, preferably from 30 to 200 µm, more preferably from 50 to 150 µm.

6. Process according to at least one of the preceding claims,
**characterized in that**
the adhesive (11) applied on the backing foil (10) is a pressure-sensitive adhesive, in particular based on acrylate or on silicone.

7. Process according to at least one of the preceding claims,
**characterized in that**
the backing foil (10) is composed of up to ten foil layers, particularly preferably composed of two to five foil layers.

8. Process according to at least one of the preceding claims,
**characterized in that**
the backing foil (10) is composed of at least two foil layers, where the two exterior foil layers are of different color, the preferred number of foil layers being precisely two.

9. Process according to at least one of the preceding claims,
**characterized in that**
the quantity of the adhesive (11) applied to the backing foil (10) is from 10 to 200 g/m²; preferably from 20 to 100 g/m², particularly preferably from 30 to 75 g/m².

10. Process according to at least one of the preceding claims,
**characterized in that**
the internal side of the mold (4) is equipped with a release agent prior to application of the adhesive tape (1).

11. Process according to at least one of the preceding claims,
**characterized in that**
the hardening of the layers of material (5) takes place in vacuo.

## Revendications

1. Procédé de façonnage d'un corps dans un moule (4), comprenant les étapes suivantes :
- l'application d'une bande adhésive (1) sur le côté intérieur d'un moule (4), les bords des rubans individuels de la bande adhésive (1, 2, 3) étant disposés côte-à-côte, c'est-à-dire ne comprenant pas d'interstice,
- la répartition des couches de matériaux (5) formant le corps sur la bande adhésive (1),
- le durcissement des couches de matériaux (5),
- l'extraction du corps du moule (4),
les rubans individuels de la bande adhésive (1, 2, 3) étant constitués par un film support (10), sur lequel une couche de masse adhésive (11), notamment une masse auto-adhésive, est appliquée d'un côté et le film support (10) contenant un ou au moins deux polymères fluorés,
le film support (10) étant constitué par un stratifié au moins bicouche de deux couches de film ou plus, la couche de film la plus extérieure, c'est-à-dire la couche de film qui est orientée vers les couches de matériaux formant le corps, étant la couche de film qui contient un ou au moins deux polymères fluorés.

2. Procédé selon la revendication 1, **caractérisé en ce que** le film support (10) contient 50 % en poids, de manière davantage préférée 75 % en poids, de manière particulièrement préférée 90 % en poids, de manière tout particulièrement préférée 95 % en poids, d'un ou d'au moins deux polymères fluorés, à chaque fois par rapport à la composition totale du film support, ou les polymères formant le film support (10) sont constitués par 100 % en poids d'un ou d'au moins deux polymères fluorés.

3. Procédé selon la revendication 1 ou 2, **caractérisé en ce que** le PTFE (polytétrafluoroéthylène), l'ETFE (poly(éthylène-co-tétrafluoroéthylène)), le FEP (poly(tétrafluoroéthylène-co-hexafluoropropylène)), le PVF (polyfluorure de vinyle), le PCTFE (polychlorotrifluoroéthylène), l'ECTFE (poly(éthylène-co-chlorotrifluoroéthylène)), le PVDF (poly(1,1-difluoroéthène)) ou le PFA (polymères de perfluoroalcoxy) ou des mélanges de deux ou plus des polymères fluorés mentionnés sont utilisés en tant que polymères fluorés.

4. Procédé selon au moins l'une quelconque des revendications 1 à 3, **caractérisé en ce que** les polymères fluorés sont mélangés avec d'autres polymères, tels que des polymères oléfiniques tels que des homo- ou copolymères d'oléfines telles que l'éthylène, le propylène ou le butylène, des polyesters tels que notamment le polytéréphtalate d'éthylène (PET), des polyamides, des polyuréthanes, le polyoxyméthylène, le polychlorure de vinyle (PVC), le polynaphtalate d'éthylène (PEN), l'éthylène-alcool vinylique (EVOH), le polychlorure de vinylidène (PVDC), le polyfluorure de vinylidène (PVDF), le polyacrylonitrile (PAN), le polycarbonate (PC), le polyamide (PA), la polyéthersulfone (PES), le polyimide (PI), les polysulfures d'arylène et/ou les polyoxydes d'arylène.

5. Procédé selon au moins l'une quelconque des revendications précédentes, **caractérisé en ce que** l'épaisseur du film support (10) est comprise entre 15 et 350 µm, de préférence entre 30 et 200 µm, de manière davantage préférée entre 50 et 150 µm.

6. Procédé selon au moins l'une quelconque des revendications précédentes, **caractérisé en ce que** la masse adhésive (11) appliquée sur le film support (10) est une masse adhésive de contact, notamment à base d'acrylate ou de silicone.

7. Procédé selon au moins l'une quelconque des revendications précédentes, **caractérisé en ce que** le film support (10) est constitué par jusqu'à dix couches de film, de manière particulièrement préférée par deux à cinq couches de film.

8. Procédé selon au moins l'une quelconque des revendications précédentes, **caractérisé en ce que** le film support (10) est constitué par au moins deux couches de film, les deux couches de film extérieures étant colorées différemment, de préférence exactement deux.

9. Procédé selon au moins l'une quelconque des revendications précédentes, **caractérisé en ce que** la masse appliquée de la masse adhésive (11) sur le film support (10) est comprise entre 10 et 200 g/m²; de préférence entre 20 et 100 g/m², de manière particulièrement préférée entre 30 et 75 g/m².

10. Procédé selon au moins l'une quelconque des revendications précédentes, **caractérisé en ce qu'**avant l'application de la bande adhésive (1), le côté intérieur du moule (4) est muni d'un agent démoulant.

11. Procédé selon au moins l'une quelconque des revendications précédentes, **caractérisé en ce que** le durcissement des couches de matériaux (5) a lieu sous vide.
